# EUROPEAN PATENT SPECIFICATION

(11) **EP 3 426 499 B1**
(45) Date of publication and mention of the grant of the patent: **28.09.2022**
(21) Application number: 17709657.5
(22) Date of filing: 08.03.2017
(51) Int. Cl.: B60B 3/16, F16B 39/10

(54) **WHEEL-NUT LOCKING CLAMP**
SPERRBÜGEL FÜR RADMUTTERN
PINCE DE BLOCAGE D'ÉCROU DE ROUE

(30) Priority: 09.03.2016 SE 1650315
(43) Date of publication of application: 16.01.2019
(73) Proprietor: Niso Tech AB, 467 30 Grästorp (SE)
(72) Inventor: NILSSON, Bengt-Åke, 467 95 Grästorp (SE); MCCULLOUGH, Mark, 467 30 Grästorp (SE)
(74) Representative: AWA Sweden AB
(86) International application number: PCT/EP2017/055456
(87) International publication number: WO 2017/153478

(56) References cited:
- EP-A1- 0 084 764
- EP-A1- 2 310 698
- EP-B1- 2 310 698
- US-A- 2 423 918

## Description

### Field of the invention

The present invention relates to a wheel-nut locking clamp for locking neighboring wheel-nuts to prevent them from turning, the wheel-nut locking clamp comprising a first portion, a second portion and an intermediary portion.

### Background of the invention

When a vehicle is in motion, the wheel-nuts of the vehicle are exposed to fluctuating loads. This is especially true with heavy vehicles such as trucks or other cargo-carrying vehicles. Such fluctuating loads can cause the wheel-nuts of said vehicle to loosen and, if left unattended, the wheel-nuts can ultimately run a risk of becoming detached from the wheel of the vehicle. This can in turn lead to the entire wheel of the vehicle coming loose and potentially crashing into other vehicles or pedestrians.

In order to reduce the probability of this happening, there are a number of devices already known in the art which can be fitted to the wheel-nuts of vehicles.

WO2010/037547 discloses an apparatus for securing wheel-nuts of a vehicle, the apparatus comprising a first part for engaging a first nut, a second part for engaging a second nut and a flexible elongated member to engage said first and second parts.

When an apparatus of this kind is fitted on a wheel-nut of a vehicle, there is still a slight freedom of movement of the wheel-nut. This freedom of movement might cause the apparatus to experience considerable wear over time due to small movements of the wheel-nuts caused by the fluctuating loads. In addition to this, considering the axial direction of said wheel-nut, the apparatus is only held in place by virtue of the small amount of friction which is present between the wheel-nut and the serrated section of said first and second part. As such, the fluctuating loads might cause this apparatus to fall off the wheel-nut, leaving the wheel-nut vulnerable to loosening from the wheel due to prolonged fluctuation of loads.

GB2330637 discloses a similar apparatus for securing wheel-nuts of a vehicle. However, this apparatus has the same disadvantage as the invention in WO2010/037547 in that the apparatus is only held in place by virtue of the small amount of friction which is present between the wheel-nut and the serrated section of the first and second part of the apparatus.

EP0084764A1 discloses a locking or securing device for a rotatable element having an edged preferably hexagonal portion, such as a bolt or a nut, comprising a locking or securing element in the form of a washer.

EP2310698A1 discloses a wheel lug nut locking device having first and planar sections, each with the opening adapted to be fitted around a wheel lug nut.

Thus, there is a need for a wheel-nut locking clamp that improves the state of the art and more securely locks neighboring wheel-nuts to prevent them from turning.

### Summary of invention

An object of the present invention is therefore to alleviate the abovementioned problems and provide a wheel-nut locking clamp for locking neighboring wheel-nuts to prevent them from turning.

A further object of the invention is to provide a wheel-nut locking clamp which is easier to correctly and securely fit on wheel-nuts than presently available alternatives.

The above and other objects which will be evident from the following description are achieved by a wheel-nut locking clamp for locking neighboring wheel-nuts to prevent them from turning according to the present invention.

According to one exemplary embodiment, a wheel-nut locking clamp for locking neighboring wheel-nuts to prevent them from turning is provided. The wheel-nut locking clamp comprises: a first portion, a second portion, the first portion and the second portion each being provided with a through hole, and the first portion and the second portion each having a wheel-facing side and an outer side, and an intermediary portion arranged between the first portion and the second portion. The first portion and the second portion are each provided with a flange located at the perimeter of their respective through holes, the flanges being arranged at an angle relative to the first and second portions, respectively, so that the flanges extend away from the wheel-facing side, and the flanges being provided with a plurality of protruding elements extending towards a center axis of the through holes.

Having the flanges of the wheel-nut locking clamp provided with the abovementioned protruding elements allows the wheel-nut locking clamp to lock wheel-nuts of a variety of diameters. When the wheel-nut locking clamp is fitted on a pair of wheel-nuts, the protruding elements are forced by the wheel-nuts to elastically deform in a direction away from the wheel. As a result of this, the protruding elements firmly secure the wheel-nuts and prevent them from turning by being in tensioned contact with the sides of the wheel-nuts.

Depending on the diameter of the wheel-nut, the protruding elements will experience varying degrees of deformation, i.e. large wheel-nuts will give rise to a larger deformation of the protruding elements than small wheel-nuts would. The wheel-nut locking clamp of the present invention can at least clamp wheel-nuts having a diameter of 30 - 33 mm.

Furthermore, the protruding elements are arranged so that the diameter of the portion of the through hole which is not obstructed by the protruding elements is smaller than the diameter of the smallest type of wheel-nut that the wheel-nut locking clamp is meant to be used with.

By providing the wheel-nut locking clamp with flanges as described above, the wheel-nut locking clamp can be fitted more securely on wheel-nuts having a conically shaped base. More specifically, by arranging the flanges at an angle such that the flanges accommodate the conically shaped bases of the wheel-nuts which are to be locked, the amount of deformation the protruding portions of said flanges experience during fitting of the wheel-nut locking clamp can be reduced. Thus, the risk of the protruding elements being bent away from the wheel-nuts to such an extent that they no longer provide a sufficient force to prevent the wheel-nuts from turning is reduced.

According to one exemplary embodiment, the angle between the flanges and the first and second portions, respectively, is at least 30°.

According to one exemplary embodiment, the angle between the flanges and the first and second portions, respectively, is at least 35°

According to one exemplary embodiment, the angle between the flanges and the first and second portions, respectively, is at least 40°.

By arranging the flanges at an angle to the first and second portions, respectively, the conically shaped base found in many types of wheel-nuts can be accommodated. Thus, a more secure locking of the wheel-nuts may be achieved.

According to one exemplary embodiment, the protruding elements are arranged at an angle relative to the first portion and the second portion. The angle between the protruding elements and the first and second portions, respectively, is smaller than the angle between the flanges and the first and second portions, respectively. Stated differently, the protruding elements are arranged at an angle relative to the flanges.

According to one exemplary embodiment, the angle between the plurality of protruding elements and the first and second portions, respectively, is at least 15°.

According to one exemplary embodiment, the angle between the plurality of protruding elements and the first and second portions, respectively, is at least 20°.

According to one exemplary embodiment, the angle between the plurality of protruding elements and the first and second portions, respectively, is at least 25°.

Having the protruding elements arranged at an angle as described above facilitates a more secure locking of the wheel-nuts as the protruding elements are tensioned against the side walls of the wheel-nuts upon being fitted thereto.

According to one exemplary embodiment, the intermediary portion is arranged to be elastically deformable so as to allow the first portion and the second portion to move relative to each other.

Upon fitting the wheel-nut locking clamp to the wheel-nuts, having the intermediary portion arranged to be elastically deformable further increases the tensioning of the wheel-nut locking clamp relative to the wheel-nuts. Thus, a more secure locking of the wheel-nuts is facilitated.

According to one exemplary embodiment, the first portion and the second portion are provided at an angle relative to each other. The angle can for example be 180°, effectively making the first portion and the second portion parallel. The angle can also be more or less than 180°.

According to one exemplary embodiment, the wheel-nut locking clamp is made of a metal. Any suitable metal may be used. For example, metals having a resistance to oxidation or the like, as the wheel-nut locking clamp are primarily used on wheels of heavy-duty vehicles operated outdoors. By having the wheel-nut locking clamp being made of metal, a good balance between tensile strength and elasticity is achieved. Thus, the wheel-nuts can be more securely locked. Also, by using metal, the wheel-nut locking clamp is cheap and easy to manufacture. However, it is possible to use other materials. For example, certain polymers have material properties that make them a suitable substitute for replacing the metal in mechanical applications.

According to one exemplary embodiment, the wheel-nut locking clamp has an average material thickness between 0.5 mm - 5 mm. By having the wheel-nut locking clamp being made with the abovementioned average material thickness, it becomes cheap and easy to manufacture. Average material thickness refers to the average thickness of the material, measured from the wheel-facing side to the outer side.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of exemplary embodiments of the present invention, with reference to the appended drawings, wherein:
Fig. 1 is a perspective view of a wheel-nut locking clamp according to the present invention, said wheel-nut locking clamp being arranged to be fitted on the wheel-nuts of a wheel,
Fig. 2a is a lateral view showing a longitudinal cross-section of the wheel-nut locking clamp according to the present invention,
Fig. 2b is a detailed view of the wheel-nut locking clamp in Fig. 2a showing a flange and a protruding element arranged on said flange,
Fig. 3 shows the wheel-nut locking clamp in Fig. 2a after it has been fitted on a pair of wheel-nuts of a wheel,
Figs. 4-5 are perspective views of the wheel-nut locking clamp according to the present invention, and
Fig. 6 is a top view of the wheel-nut locking clamp according to the present invention.

### Detailed description of the preferred embodiments

In the present detailed description, embodiments of a wheel-nut locking clamp according to the present invention are mainly discussed with reference to views showing a wheel-nut locking clamp with components and portions being relevant in relation to various embodiments of the invention. It should be noted that this by no means limits the scope of the invention, which is also applicable in other circumstances for instance with other types or variants of wheel-nut locking clamps than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

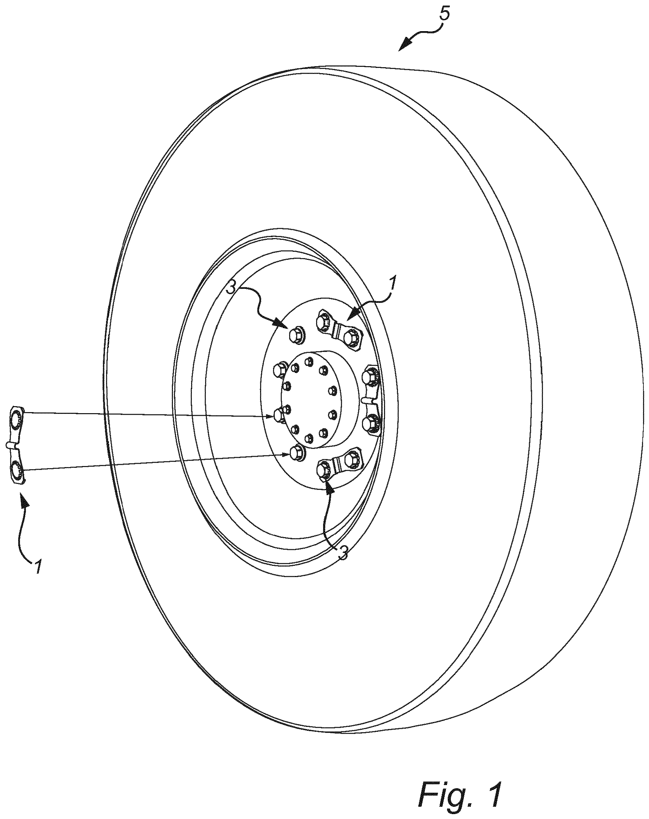

Fig. 1 is a perspective view of a wheel-nut locking clamp 1 and a wheel 5. The wheel-nut locking clamp 1 is arranged to be fitted on the wheel-nuts 3 of the wheel 5. In Fig.1, three pairs of wheel-nuts 3 have been locked by the fitting of wheel-nut locking clamps 1. It is of course possible to fit a wheel with any number of wheel-nut locking clamps deemed suitable, e.g. locking each wheel-nut 3 of the wheel 5. It should also be understood that a wheel-nut locking clamp 1 may be used to overlap another wheel-nut locking clamp such that two wheel-nut locking clamps lock a total of three nuts, or even double fit two wheel-nut locking clamps to two wheel-nuts.

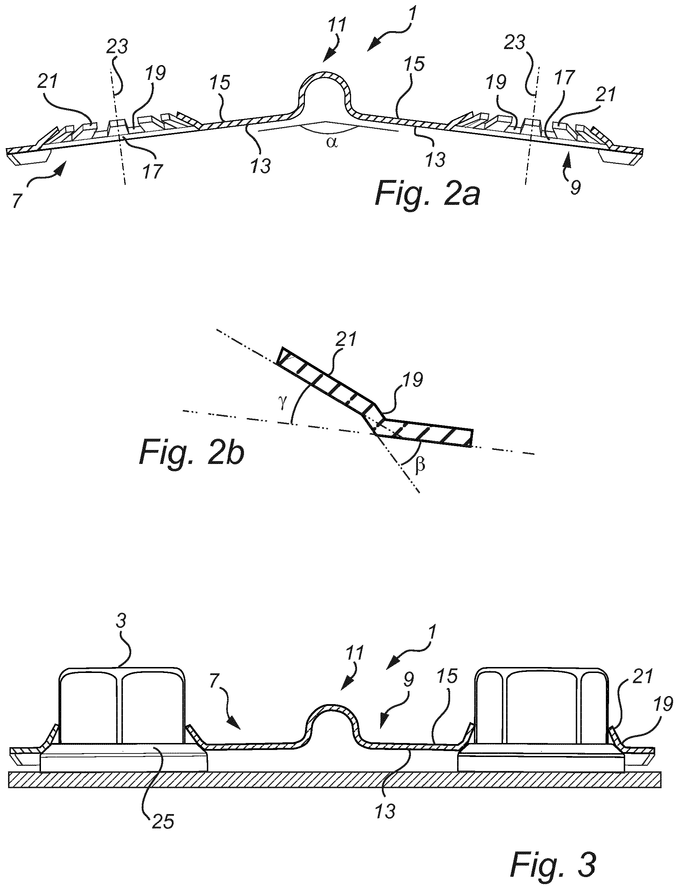

Fig. 2a is a side view showing a longitudinal cross-section of the wheel-nut locking clamp 1 of Fig. 1. The wheel-nut locking clamp comprises a first portion 7 and a second portion 9, arranged at an angle α to each other. The angle α may be 180° such that the first and second portion 7, 9 are arranged in a flat manner, or the angle α may be in the range of 120°-180°. Each of the first portion 7 and the second portion 9 has a wheel facing side 13 and an outer side 15, and is each provided with a through hole 17. The wheel-nut locking clamp 1 is adapted to clamp wheel-nuts having a diameter of 30 - 33 mm, therefore the through holes 17 have a diameter of at least 33 mm. The wheel facing side 13 and the outer side 15 are arranged opposite to each other. The wheel facing side 13 is the side of the first portion 7 and second portion 9 which is arranged to face the wheel 5 when the wheel-nut locking clamp 1 is fitted on the wheel-nuts 3 of a wheel 5. The through hole 17 is arranged so that a hole is provided going from the wheel facing side 13 to the outer side 15.

The wheel-nut locking clamp further comprises an intermediary portion 11, arranged between the first portion 7 and the second portion 9. In Fig. 2a, the intermediary portion 11 is U-shaped and the transition between the intermediary portion 11 and each of the first portion 7 and the second portion 9 is rounded. The shape of the intermediary portion 11 may also be triangular, square or straight. The transition between the intermediary portion 11 and each of the first portion 7 and the second portion 9 may also be sharp.

On the perimeter of their respective through holes 17, each of the first portion 7 and the second portion 9 is provided with a flange 19. The flanges 19 are arranged to extend from a perimeter of the through holes 17 towards a center axis 23 of the through holes 17. As seen in Fig. 2b, the flange 19 is arranged at an angle β to the first portion 7 or the second portion 9. The angle β is at least 30°.

Furthermore, the flanges 19 are provided with a plurality of protruding elements 21 extending towards a center axis 23 of the through holes 17. The protruding elements are provided at an angle γ to the first portion 7 or the second portion 9. In Fig. 2b, the angle β is larger than the angle γ and the angle γ is at least 15°. Depending on the design of the wheel-nut 3 to be locked, other relationships between the angle β and the angle γ are of course possible, e.g. the angle β can be equal to the angle γ, or, the angle β can be smaller than the angle γ.

Fig. 3 shows the wheel-nut locking clamp 1 from Fig. 2a after it has been fitted on a pair of wheel-nuts 3 of a wheel 5. As can be seen in the drawing, the wheel-nut locking clamp 1 is arranged so that the flanges 19 are substantially undeformed, or only deformed to a small amount, by the conically shaped bases 25 of the wheel-nuts 3.

In contrast, the protruding elements 21 are deformed by the wheel-nuts 3 upon fitting the wheel-nut locking clamp 1 to the wheel-nuts 3, thereby making the angle γ larger after fitting than it was before. This deformation of the protruding elements 21 is at least partially elastic. Thus, the protruding elements 21 are tensioned against the wheel-nuts 3 so that the wheel-nuts 3 are prevented from turning.

Furthermore, the wheel-nut locking clamp 1 is arranged so that the intermediary portion 11 is deformed upon fitting the wheel-nut locking clamp 1 to the wheel-nuts 3, thereby making the angle α larger after fitting than it was before. This deformation of the intermediary portion 11 is at least partially elastic.

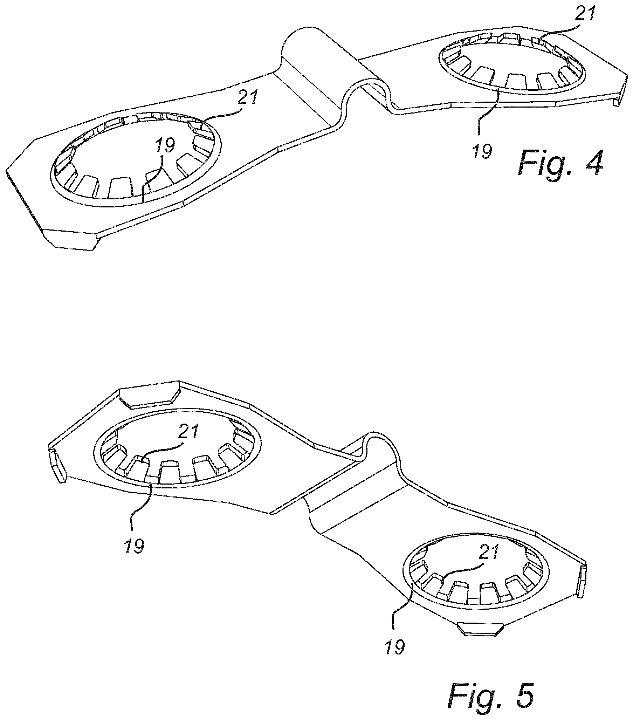

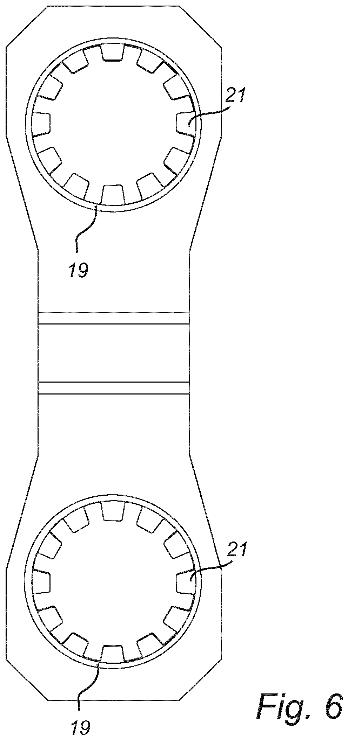

Figs. 4-5 are perspective views of the wheel-nut locking clamp 1 and Fig. 6 is a top view of the wheel-nut locking clamp 1. The flanges 19 located at the perimeter of their respective through holes 17 and the protruding elements 21 may be more clearly seen in figures 4-6.

In the figures described above, the first and second portions 7, 9 are symmetrical mirror images of each other. However, it is possible that the first and second portions 7, 9 have different designs, e.g. the through hole 17 could be provided in one location on the first portion 7 and in another location on the second portion 9, or, the length of the first portion 7 can be longer than the length of the second portion 9. The protruding elements 21 are throughout the drawings shown having a substantially isosceles trapezoidal shape with rounded corners. It is of course possible that the protruding elements have other shapes, such as rectangular, square, with or without rounded corners.

Further, in the appended drawings twelve protruding elements 21 are shown to be arranged on each flange 19 at the through holes 17. It is of course possible to use fewer or more protruding elements, such as any number in the range of 2 (two) to 20 (twenty) protruding elements (not shown). The protruding elements 21 are also shown as being equally distanced from the adjacent protruding elements, i.e. each protruding element 21 have the same pitch distance. This may be altered such that larger concentrations of protruding elements are placed on certain portions of the flange (not shown).

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims.

Furthermore, any reference signs in the claims should not be construed as limiting the scope.

## Claims

1. Wheel-nut locking clamp (1) for locking neighboring wheel-nuts (3) to prevent them from turning, said wheel-nut locking clamp (1) comprising:
a first portion (7),
a second portion (9),
said first portion (7) and said second portion (9) each being provided with a through hole (17), and
said first portion (7) and said second portion (9) each having a wheel-facing side (13) and an outer side (15),
and an intermediary portion (11) arranged between said first portion (7)
and said second portion (9), **characterized by**
said first portion (7) and said second portion (9) are each provided with a flange (19) located at the perimeter of their respective through holes (17),
said flanges (19) being arranged at an angle (β) relative to said first and
second portions (7, 9), respectively, so that said flanges (19) extend away from said wheel-facing side (13), and
said flanges (19) being provided with a plurality of protruding elements (21) extending towards a center axis (23) of said through holes (17).

2. A wheel-nut locking clamp (1) according to claim 1, wherein the angle (β) between said flanges (19) and said first and second portions (7, 9), respectively, is at least 30°.

3. A wheel-nut locking clamp (1) according to any of the preceding claims, wherein the angle (β) between said flanges (19) and said first and second portions (7, 9), respectively, is at least 35°.

4. A wheel-nut locking clamp (1) according to any of the preceding claims, wherein the angle (β) between said flanges (19) and said first and second portions (7, 9), respectively, is at least 40°.

5. A wheel-nut locking clamp (1) according to any of the preceding claims, wherein said protruding elements (21) are arranged at an angle (γ) relative to said first portion and said second portion,
wherein the angle (γ) between said protruding elements and said first and second portions (7, 9), respectively, is smaller than the angle (β) between said flanges (19) and said first and second portions (7, 9), respectively.

6. A wheel-nut locking clamp (1) according to claim 5, wherein the angle (γ) between said plurality of protruding elements (21) and said first and second portions (7, 9), respectively, is at least 15°.

7. A wheel-nut locking clamp (1) according to any claims 5 - 6, wherein the angle (γ) between said plurality of protruding elements (21) and said first and second portions (7, 9), respectively, is at least 20°.

8. A wheel-nut locking clamp (1) according to any claims 5 - 7, wherein the angle (γ) between said plurality of protruding elements (21) and said first and second portions (7, 9), respectively, is at least 25°.

9. A wheel-nut locking clamp (1) according to any of the preceding claims, wherein said intermediary portion (11) is arranged to be elastically deformable so as to allow said first portion (7) and said second portion (9) to move relative to each other.

10. A wheel-nut locking clamp (1) according to any of the preceding claims, wherein said first portion (7) and said second portion (9) are provided at an angle (α) relative to each other.

## Patentansprüche

1. Radmutternsperrklammer (1) zum Sperren benachbarter Radmuttern (3), um sie am Drehen zu hindern, wobei die Radmutternsperrklammer (1) umfasst:
einen ersten Abschnitt (7),
einen zweiten Abschnitt (9),
wobei der erste Abschnitt (7) und der zweite Abschnitt (9) jeweils mit einem Durchgangsloch (17) versehen sind, und wobei der erste Abschnitt (7) und der zweite Abschnitt (9) jeweils eine dem Rad zugewandte Seite (13) und eine Außenseite (15) aufweisen,
und einen Zwischenabschnitt (11), der zwischen dem ersten Abschnitt (7) und dem zweiten Abschnitt (9) angeordnet ist, **gekennzeichnet durch**
der erste Abschnitt (7) und der zweite Abschnitt (9) jeweils mit einem Flansch (19) versehen sind, der am Umfang ihrer jeweiligen Durchgangslöcher (17) angeordnet ist,
die Flansche (19) in einem Winkel (13) relativ zu dem ersten bzw. zweiten Abschnitt (7, 9) angeordnet sind, so dass sich die Flansche (19) von der dem Rad zugewandten Seite (13) weg erstrecken, und
wobei die Flansche (19) mit einer Vielzahl von vorstehenden Elementen (21) versehen sind, die sich in Richtung einer Mittelachse (23) der Durchgangslöcher (17) erstrecken.

2. Radmutternsperrklammer (1) nach Anspruch 1,
wobei der Winkel (13) zwischen den Flanschen (19) und dem ersten bzw. zweiten Abschnitt (7, 9) mindestens 30° beträgt.

3. Radmutternsperrklammer (1) nach einem der vorhergehenden Ansprüche,
wobei der Winkel (13) zwischen den Flanschen (19) und dem ersten bzw. zweiten Abschnitt (7, 9) mindestens 35° beträgt.

4. Radmutternsperrklammer (1) nach einem der vorhergehenden Ansprüche,
wobei der Winkel (13) zwischen den Flanschen (19) und dem ersten bzw. zweiten Abschnitt (7, 9) mindestens 40° beträgt.

5. Radmutternsperrklammer (1) nach einem der vorhergehenden Ansprüche,
wobei die vorspringenden Elemente (21) in einem Winkel (y) relativ zu dem ersten Abschnitt und dem zweiten Abschnitt angeordnet sind,
wobei der Winkel (y) zwischen den vorstehenden Elementen und dem ersten bzw. zweiten Abschnitt (7, 9) kleiner ist als der Winkel (13) zwischen den Flanschen (19) und dem ersten bzw. zweiten Abschnitt (7, 9).

6. Radmutternsperrklammer (1) nach Anspruch 5, wobei der Winkel (y) zwischen der Vielzahl von vorstehenden Elementen (21) und dem ersten bzw. zweiten Abschnitt (7, 9) mindestens 15° beträgt.

7. Radmutternsperrklammer (1) nach einem der Ansprüche 5 bis 6, wobei der Winkel zwischen der Vielzahl von vorstehenden Elementen (21) und dem ersten bzw. zweiten Abschnitt (7, 9) mindestens 20° beträgt.

8. Radmutternsperrklammer (1) nach einem der Ansprüche 5 bis 7, wobei der Winkel zwischen der Vielzahl von vorstehenden Elementen (21) und dem ersten bzw. zweiten Abschnitt (7, 9) mindestens 25° beträgt.

9. Radmutternsperrklammer (1) nach einem der vorhergehenden Ansprüche, wobei der Zwischenabschnitt (11) so angeordnet ist, dass er elastisch verformbar ist, so dass der erste Abschnitt (7) und der zweite Abschnitt (9) sich relativ zueinander bewegen können.

10. Radmutternsperrklammer (1) nach einem der vorhergehenden Ansprüche, wobei der erste Abschnitt (7) und der zweite Abschnitt (9) in einem Winkel (a) zueinander angeordnet sind.

## Revendications

1. Pince de blocage d'écrou de roue (1) pour le blocage d'écrous de roue voisins (3) afin de les empêcher de tourner, ladite pince de blocage d'écrou de roue (1) comprenant :
une première section (7),
une seconde section (9),
ladite première section (7) et ladite seconde section (9) étant chacune pourvue d'un trou traversant (17), et
ladite première section (7) et ladite seconde section (9) ayant chacune une face tournée vers la roue (13) et une face extérieure (15),
et une section intermédiaire (11) disposée entre ladite première section (7) et ladite seconde section (9), **caractérisée en ce que**
ladite première section (7) et ladite seconde section (9) sont chacune pourvues d'une bride (19) située sur le périmètre de leur trou traversant respectif (17),
lesdites brides (19) étant disposées suivant un angle (β) par rapport auxdites première et seconde sections (7, 9) respectivement, de sorte que lesdites brides (19) s'étendent depuis ladite face tournée vers la roue (13), et
lesdites brides (19) étant pourvues d'une pluralité d'éléments saillants (21) s'étendant vers un axe central (23) desdits trous traversant (17)

2. Pince de blocage d'écrou de roue (1) selon la revendication 1, dans laquelle l'angle (β) entre lesdites brides (19) et lesdites première et seconde sections (7, 9) respectivement est d'au moins 30°.

3. Pince de blocage d'écrou de roue (1) selon l'une quelconque des revendications précédentes, dans laquelle l'angle (β) entre lesdites brides (19) et lesdites première et seconde sections (7, 9) respectivement est d'au moins 35°.

4. Pince de blocage d'écrou de roue (1) selon l'une quelconque des revendications précédentes, dans laquelle l'angle (β) entre lesdites brides (19) et lesdites première et seconde sections (7, 9) respectivement est d'au moins 40°.

5. Pince de blocage d'écrou de roue (1) selon l'une quelconque des revendications précédentes, dans laquelle lesdits éléments saillants (21) sont disposés suivant un angle (y) par rapport à ladite première section et à ladite seconde section,
l'angle (y) entre lesdits éléments saillants et lesdites première et seconde sections (7, 9) respectivement étant inférieur à l'angle (β) entre lesdites brides (19) et lesdites première et seconde sections (7, 9) respectivement.

6. Pince de blocage d'écrou de roue (1) selon la revendication 5, dans laquelle l'angle (y) entre ladite pluralité d'éléments saillants et lesdites première et seconde sections (7, 9) respectivement est d'au moins 15°.

7. Pince de blocage d'écrou de roue (1) selon l'une quelconque des revendications 5 à 6, dans laquelle l'angle (y) entre ladite pluralité d'éléments saillants (21) et lesdites première et seconde sections (7, 9) respectivement est d'au moins 20 °.

8. Pince de blocage d'écrou de roue (1) selon l'une quelconque des revendications 5 à 7, dans laquelle l'angle (y) entre ladite pluralité d'éléments saillants (21) et lesdites première et seconde sections (7, 9) respectivement est d'au moins 25°.

9. Pince de blocage d'écrou de roue (1) selon l'une quelconque des revendications précédentes, dans laquelle ladite section intermédiaire (11) est conçue pour être élastiquement déformable de manière à permettre à ladite première section (7) et à ladite seconde section (9) de bouger l'une par rapport à l'autre.

10. Pince de blocage d'écrou de roue (1) selon l'une quelconque des revendications précédentes, dans laquelle ladite première section (7) et ladite seconde section (9) présentent un angle (α) l'une par rapport à l'autre.
